# FASCICULE DE BREVET EUROPEEN

(11) **EP 1 374 160 B1**
(45) Date de publication et mention de la délivrance du brevet: **08.12.2010**
(21) Numéro de dépôt: 02720086.4
(22) Date de dépôt: 27.03.2002
(51) Int. Cl.: G06K 19/073

(54) **CARTE A PUCE ET PROCEDE DE PROTECTION D'UNE CARTE A PUCE**
CHIPKARTE UND VERFAHREN ZUM SCHÜTZEN EINER CHIPKARTE
SMART CARD METHOD FOR PROTECTING A SMART CARD

(30) Priorité: 02.04.2001 FR 0104453
(43) Date de publication de la demande: 02.01.2004
(73) Titulaire: OBERTHUR TECHNOLOGIES, 92300 Levallois-Perret (FR)
(72) Inventeur: DISCHAMP, Paul, F-75015 Paris (FR)
(74) Mandataire: Santarelli
(86) Numéro de dépôt international: PCT/FR2002/001058
(87) Numéro de publication internationale: WO 2002/080094

(56) Documents cités:
- WO-A-01/08088
- DE-A- 19 911 673
- FR-A- 2 616 941
- FR-A- 2 793 904
- US-A- 4 970 453

## Description

L'invention se rapporte à un procédé de protection d'une entité électronique à microcircuit, notamment une carte à microcircuit à accès crypté, ladite protection visant plus particulièrement les attaques connues dites par "analyse de courant". L'invention concerne également une entité électronique à microcircuit, notamment une carte à microcircuit à accès crypté, équipée de moyens permettant d'obtenir la protection offerte par ledit procédé.

On sait que certaines entités électroniques à accès crypté, notamment les cartes à microcircuit sont vulnérables à certaines attaques fondées sur l'analyse de certains paramètres pendant une phase de fonctionnement. On dit que les informations peuvent "fuir" à partir d'un calcul fait dans ladite entité électronique (la carte), typiquement l'exécution d'un protocole cryptographique provoqué par le fraudeur en possession illégale de la carte. Les paramètres analysés pendant l'exécution d'un tel protocole peuvent être, typiquement des différences de temps de calcul ou des radiations électromagnétiques pendant l'exécution du calcul mais surtout la consommation de courant de l'entité électronique elle-même pendant l'exécution d'un protocole cryptographique.

Ainsi, une attaque classique consiste à faire exécuter par l'entité électronique tombée en la possession du fraudeur un certain nombre de protocoles cryptographiques fondés sur des messages quelconques, donc voués à l'échec, mais ayant pour conséquence de faire exécuter chaque fois, par l'entité (la carte à microcircuit) un algorithme cryptographique, par exemple l'un d'entre eux, connu sous l'abréviation DES (DATA ENCRYPTION STANDARD) en anglais tout en analysant la consommation de courant à chaque exécution dudit DES. Le but de cette attaque est de retrouver la clé secrète de ladite entité. Le DES est, quant à lui, un algorithme connu, très largement utilisé actuellement dans le domaine des cartes bancaires cartes bancaires, cartes SIM (GSM), cartes d'accès à de la télévision à péage ou dans celui des cartes de contrôle d'accès.

Dans le cas d'une fraude, c'est à dire dans le cas où le fraudeur dispose de la carte et cherche à déterminer la clé, celui-ci peut connecter ladite carte à un lecteur par lequel il pourra lui transmettre des messages et la relier à des moyens d'enregistrement de la consommation de courant du microcircuit pendant l'exécution des opérations qu'elle effectue. Le fraudeur provoque l'exécution de multiples DES et, à chaque fois, la consommation de courant est détectée et mémorisée. A partir de l'ensemble de ces données et, notamment, des mesures de la consommation de courant, il est possible de mettre en oeuvre des attaques dont le principe est connu. Ces attaques dites « SPA/DPA » (Simple / Differential Power Analysis) en anglais permettent de reconstituer la clé de l'entité électronique.

Dans un article publié le 17 août 2000 lors de la conférence CHES 2000 et édité par SPRINGER sous le N° 1965, on a envisagé d'utiliser une pile intégrée à l'entité électronique pour alimenter le microcircuit. Cependant, l'auteur de cet article écartait finalement cette solution, la jugeant peu pratique et difficile à mettre en oeuvre. L'invention permet de résoudre les problèmes évoqués par l'auteur de cet article.

Le document DE1999 11 673 A concerne la protection d'une carte à puce, dans laquelle, on découple l'alimentation de la puce vis-à-vis de l'alimentation de la carte pendant le traitement de données en sorte qu'un masquage des impulsions détectables aux bornes de la carte puisse être obtenu en intercalant une batterie, un redresseur ou une unité d'alimentation intégrée entre l'alimentation externe et l'entité de calcul à protéger (crypto processeur). Il est noter que la batterie reste connectée en permanence à l'entité de calcul à protéger et elle est, elle-même, alimentée par la source externe pendant qu'elle alimente l'entité lors du traitement de données normales. Cette batterie joue ainsi un rôle de filtre. De plus, la batterie est, en permanence, potentiellement sollicitée, ce qui peut conduire à une décharge continue. Il est à noter que, dans ce document, la recharge de la batterie se fait au moment où le calculateur a besoin d'énergie, ce qui se traduit par le fait que, si la batterie a atteint un niveau trop faible, il faut attendre un certain temps de recharge avant que le calculateur puisse effectuer son opération.

Le document US 4,970,453 décrit une carte à microcircuit comportant une cellule solaire de recharge d'une batterie interne et des moyens de régulation du voltage appliqué à la batterie lors de sa recharge par une alimentation externe.

Plus précisément, l'invention concerne un procédé de protection d'une entité électronique à microcircuit selon la revendication 1.

L'accumulateur de courant précité peut être une pile mais de préférence un accumulateur de type rechargeable. Dans ce cas, on peut recharger l'accumulateur à chaque transaction, c'est à dire chaque fois que l'entité électronique est couplée à un serveur capable de lui délivrer l'énergie électrique nécessaire. De préférence, le microcircuit est conçu et programmé pour commander la charge de l'accumulateur en dehors des périodes de temps où celui-ci est utilisé pour alimenter le microcircuit ou la partie du microcircuit chargée d'exécuter lesdites opérations prédéterminée. En variante ou en complément, on peut recharger ledit accumulateur par de l'énergie électrique d'origine solaire au moyen d'une cellule photoélectrique intégrée à l'entité électronique. Il est possible en effet, dans l'état actuel des progrès de la technologie, d'envisager d'intégrer dans l'épaisseur d'une carte au moins une pile ou un accumulateur rechargeable et aussi une cellule photoélectrique.

Les opérations prédéterminées précitées pendant lesquelles le microcircuit ou une partie de celui-ci sera alimentée de façon interne et non plus par le serveur auquel l'entité électronique est reliée (qui pourrait être en fait un appareil destiné à percer les codes secrets de la carte) sont tous les échanges d'informations dits "sensibles", au cours desquels les données confidentielles sont échangées. Ces opérations sont par exemple les algorithmes cryptographiques au cours desquels des clés sont utilisées ou échangées, la procédure de vérification du code dit "PIN", etc...

En variante, on peut faire exécuter lesdites opérations prédéterminées par un coprocesseur alimenté par ledit accumulateur tandis qu'un processeur principal alimenté par ledit serveur est chargé d'exécuter d'autres opérations. Une autre solution peut consister à commuter un processeur principal pour qu'il soit alimenté par ledit accumulateur pendant qu'il exécute lesdites opérations prédéterminées "sensibles" tout en alimentant, pendant ces périodes de temps, un circuit formant leurre à partir dudit serveur, lequel circuit continue à effectuer des opérations et donc à simuler une certaine consommation de courant. Cependant, cette consommation de courant est indépendante des opérations prédéterminées sensibles qui sont exécutées à ce moment. Il devient alors impossible à partir d'un enregistrement du courant d'alimentation, de récupérer des données sensibles comme les clés cryptographiques, le code PIN, etc... En effet, le courant nécessaire étant fourni par une pile ou un accumulateur situé à l'intérieur de l'entité électronique à microcircuit, aucune information intéressante sur l'état de fonctionnement du processeur ne peut "fuir" à l'extérieur de la carte, via l'analyse du courant fourni par le serveur.

Même dans le cas où l'entité électronique est équipée d'une simple pile non rechargeable, la durée de vie de celle-ci est assez longue puisque ladite pile n'est utilisée que pour l'exécution de petites parties de programme et non pas pour l'ensemble des opérations constituant une transaction entre ladite entité électronique et le serveur. L'utilisation d'un leurre ou d'un coprocesseur permet d'éviter qu'un attaquant puisse déterminer les moments où se déroulent les parties sensibles du programme, puisque, pendant ces intervalles de temps, le microcircuit continue à effectuer des opérations consommant du courant fourni par le serveur extérieur.

L'invention concerne également une entité électronique à accès crypté selon la revendication 9.

Selon un mode de réalisation possible, lesdits moyens de sélection comportent un multiplexeur ou analogue commandé par un processeur dudit microcircuit. Ce multiplexeur comprend deux entrées, l'une connectée à une borne de contact pour le raccordement aux moyens d'alimentation électrique dudit serveur et l'autre connectée audit accumulateur. Une sortie dudit multiplexeur est reliée à une ligne d'alimentation électrique du processeur. Le multiplexeur est commandé par le processeur pour opérer ladite sélection entre les moyens d'alimentation électrique dudit serveur et ledit accumulateur de courant intégré à ladite entité électronique.

La borne de contact précité est l'une des plages de raccordement électrique que l'on trouve le plus souvent à la surface d'une carte à microcircuit du type carte bancaire ou carte de contrôle d'accès. Cependant, on sait que certaines de ces cartes peuvent être équipées d'une antenne susceptible d'être couplée à une antenne située dans le serveur. Ce système d'antennes est, de façon connue, adapté aussi bien aux échanges d'informations qu'à la fourniture d'une énergie électrique suffisante pour alimenter le microcircuit. L'invention s'applique aussi à ce type de carte et, dans ce cas, l'une des entrées du multiplexeur est reliée à un circuit d'alimentation recevant son énergie de l'antenne intégrée à l'entité électronique (la carte).

L'invention sera mieux comprise et d'autres avantages de celle-ci apparaîtront plus clairement à la lumière de la description qui va suivre de plusieurs modes de réalisation d'une entité électronique protégée par mise en oeuvre du concept énoncé ci-dessus, donnée uniquement à titre d'exemple et faite en référence aux dessins annexés dans lesquels :
- la figure 1 est une vue schématique en coupe d'une carte à microcircuit équipée du perfectionnement conforme à l'invention, connectée à un serveur ;
- la figure 2 est un schéma-bloc d'un premier mode de réalisation d'une entité électronique conforme à l'invention ;
- la figure 3 est un schéma-bloc analogue, illustrant une variante ;
- la figure 4 est un autre schéma-bloc, illustrant encore une variante.

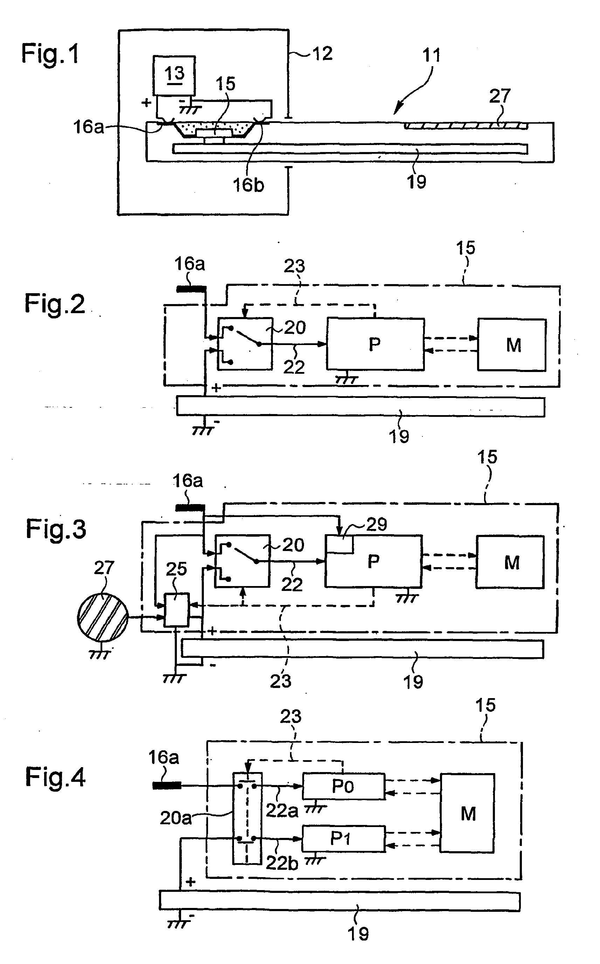

En considérant plus particulièrement la figure 1, on a représenté une entité électronique sous la forme d'une carte à microcircuit 11 équipée du perfectionnement de l'invention et représentée connectée à un serveur 12comportant une alimentation électrique susceptible de fournir l'énergie électrique 13 nécessaire au fonctionnement du microcircuit logé dans une cavité de la carte. De façon classique, le microcircuit 15 est accessible de l'extérieur par un certain nombre de plages de raccordement métalliques, affleurant à la surface de la carte. L'une de ces plages constitue une borne de contact 16a reliée à l'un des pôles de l'alimentation 13 par l'intermédiaire d'un élément de contact frottant. Une autre plage de raccordement constitue une borne de contact 16b reliée à l'autre pôle de l'alimentation, (reliée à la masse). Les autres plages de raccordement permettent les échanges d'information entre le microcircuit et le serveur.

Selon une caractéristique remarquable de l'invention, une pile ou un accumulateur rechargeable 19 est logé dans l'épaisseur de la carte. De plus, le microcircuit comporte des moyens de sélection, par exemple essentiellement constituées par un multiplexeur 20 ou analogue. Ce multiplexeur est relié à la fois à la borne de contact 16a destinée à être connectée à l'alimentation électrique du serveur 12 et à l'un des pôle de l'accumulateur 19 logé dans l'épaisseur de la carte. L'autre pôle de l'accumulateur de courant est relié à la masse.

La figure 2 montre plus précisément l'agencement général du microcircuit 15 et sa liaison avec l'un des pôle de l'accumulateur de courant 19. Dans l'exemple de la figure 2, le microcircuit se compose essentiellement d'un processeur P, d'un bloc mémoire M et d'un multiplexeur 20 à deux entrées et une sortie. Sur les figures 2 à 4, les liaisons électriques d'alimentation sont représentées en trait plein, tandis que les liaisons de commande ou d'échange d'information sont représentées en traits interrompus. L'une des entrées du multiplexeur est relié à la borne de contact 16a tandis que l'autre entrée est reliée à l'un des pôles de l'accumulateur de courant 19. Ce multiplexeur constitue des moyens de sélection agencés pour commuter l'alimentation d'au moins une partie du microcircuit 15, en l'occurrence ici la totalité du processeur P, sur l'accumulateur de courant 19 intégré lorsque des opérations prédéterminées sont exécutées par le processeur. Les opérations prédéterminées en question sont les opérations sensibles définies ci-dessus. La sortie du multiplexeur est reliée à une ligne d'alimentation électrique 22 du processeur. En outre, le multiplexeur (20) est commandé par le processeur P (liaison de commande 23) pour opérer la sélection entre l'alimentation électrique 13 du serveur et l'accumulateur de courant. Dans l'exemple de la figure 1, l'accumulateur de courant 19 peut être une simple pile. La longévité de cette pile résulte du fait qu'elle n'alimente le processeur qu'une petite partie du temps d'exploitation de la carte, c'est-à-dire lorsque celui-ci effectue des opérations dites sensibles. Pour toutes les autres opérations, le processeur est alimenté par l'alimentation 13 du serveur, via la borne de contact 16a et le multiplexeur 20 positionné en conséquence par un signal de commande appliqué via la liaison de commande 23. Dans le mode de réalisation de la figure 3, les éléments analogues à ceux de la figure 2 portent les mêmes références. Selon cette variante, le microcircuit comporte en outre un circuit de charge 25 de l'accumulateur de courant 19. Ce dernier est d'un type rechargeable. Ce circuit de charge 25 est connecté entre la borne de contact 16a et l'accumulateur 19. Il est piloté par le processeur P pour recharger l'accumulateur lorsque le processeur est alimenté via le serveur, c'est-à-dire par l'alimentation 13. Avantageusement mais non obligatoirement, la carte intègre également une cellule photoélectrique 27 connectée pour recharger l'accumulateur de courant 19. Cette cellule photoélectrique est ici reliée au circuit de charge 25 qui assure la régulation du courant mais la mise en service de la cellule photoélectrique 27 n'est pas obligatoirement pilotée par le processeur. La cellule photoélectrique peut en effet être connectée pour recharger au moins partiellement l'accumulateur dès lors qu'elle reçoit un éclairement suffisant.

Selon une autre caractéristique avantageuse, le microcircuit 15 et plus particulièrement le microprocesseur P peut comporter un circuit opératoire 29 formant leurre directement connecté au moyen de couplage avec le serveur, c'est-à-dire la borne de connexion 16a. Ce circuit opératoire est piloté pour exécuter des opérations lorsque le reste du microcircuit ou au moins la partie de celui-ci qui exécute lesdites opérations prédéterminées est alimenté par le générateur de courant 19.

Selon une autre variante possible, illustrée à la figure 4, le microcircuit 15 comporte un processeur principal P₀ et un coprocesseur P₁. Ce dernier est dédié à l'exécution desdites opérations prédéterminées. De plus, dans cet exemple, le multiplexeur 20a comporte deux entrées et deux sorties, l'ensemble formant une sorte de double interrupteur commandé, l'un des interrupteurs étant ouvert lorsque l'autre est fermé et réciproquement. La borne de contact 16a est reliée à l'une des entrées et la sortie correspondante est connectée à la ligne d'alimentation électrique 22a du processeur principal. L'une des bornes de la batterie 19 est connectée à l'autre entrée et la sortie correspondante est connectée à la ligne d'alimentation 22b du coprocesseur P₁. Le processeur principal et le coprocesseur sont associés à un bloc mémoire M. L'un des deux processeurs, par exemple le processeur principal commande les moyens de sélection, par une liaison de commande 23. Ainsi, le coprocesseur est uniquement alimenté par l'accumulateur de courant via ces moyens de sélection.

On peut encore envisager de simplifier la variante de la figure 3 en reliant directement la ligne d'alimentation 22a du processeur P₀ à la borne de contact 16a. Le multiplexeur 20a est alors équivalent à un simple interrupteur commandé par le processeur P₀. Dans ce cas, il est avantageux d'agencer le processeur P₀ pour que celui-ci continue à exécuter des opérations (leurre) lorsque le coprocesseur P₁ est en service.

## Revendications

1. Procédé de protection d'une entité électronique à microcircuit telle qu'une carte à microcircuit, contre les attaques par analyse de courant, du type consistant à associer audit microcircuit (15) un accumulateur de courant (19) placé à l'intérieur de ladite entité en sorte que, pendant un échange d'informations où ladite entité est couplée à un serveur (12) apte à lui fournir une alimentation électrique (13), on alimente au moins une partie dudit microcircuit par de l'énergie électrique fournie par ledit accumulateur pendant l'exécution d'opérations prédéterminées par ladite au moins une partie dudit microcircuit, **caractérisé en ce que**, pour alimenter au moins cette partie dudit microcircuit, on connecte ladite partie du microcircuit audit accumulateur uniquement pendant l'exécution desdites opérations prédéterminées, ledit serveur fournissant de l'énergie électrique audit microcircuit pendant l'exécution des dites autres opérations et ne fournissant pas de l'énergie électrique à ladite partie du microcircuit pendant lesdites opérations prédéterminées.

2. Procédé selon la revendication 1, **caractérisé en ce que** ledit accumulateur de courant (19) étant du type rechargeable, on le recharge par de l'énergie électrique fournie par ledit serveur (13) lorsque ladite entité électronique s'y trouve couplée.

3. Procédé selon la revendication 2, **caractérisé en ce qu'**on commande la charge (25) dudit accumulateur (19) en dehors des périodes de temps où ledit accumulateur est utilisé pour alimenter au moins une partie dudit microcircuit

4. Procédé selon la revendication 2 ou 3, **caractérisé en ce qu'**on recharge au moins partiellement ledit accumulateur par de l'énergie électrique d'origine solaire (27), au moyen d'une cellule photoélectrique intégrée à ladite entité électronique.

5. Procédé selon l'une des revendications 1 à 4, **caractérisé en ce qu'**on fait exécuter lesdites opérations prédéterminées par un coprocesseur (P1) alimenté par ledit accumulateur (19).

6. Procédé selon l'une des revendications 1 à 4, **caractérisé en ce qu'**on commute un processeur (P) pour qu'il soit alimenté par ledit accumulateur (19) pendant qu'il exécute lesdites opérations prédéterminées et **en ce que**, pendant ces périodes de temps, on alimente à partir dudit serveur, un circuit formant leurre (29) qui continue à effectuer des opérations.

7. Procédé selon l'une quelconque des revendications 1 à 6, **caractérisé en ce que** lesdites opérations prédéterminées comportent les opérations mettant en oeuvre des données confidentielles conservées dans ladite entité électronique.

8. Procédé selon la revendication 7, **caractérisé en ce que** lesdites opérations prédéterminées comportent les opérations d'un protocole cryptographique mettant en oeuvre une clé secrète conservée dans ladite entité électronique.

9. Entité électronique à accès crypté comprenant un microcircuit (15) et des moyens de couplage (16a,16b) de celui-ci à un serveur (12) lui-même muni de moyens d'alimentation électrique (13) pour alimenter ledit microcircuit via lesdits moyens de couplage, **caractérisée en ce qu'**elle comporte en outre un accumulateur de courant (19) intégré et des moyens de sélection (20) agencés pour commuter :
- l'alimentation d'au moins une partie dudit microcircuit exclusivement sur ledit accumulateur de courant lorsque des opérations prédéterminées sont exécutées par ladite au moins une partie dudit microcircuit et
- l'alimentation d'au moins ladite partie dudit microcircuit exclusivement sur lesdits moyens d'alimentation électriques dudit serveur lorsque d'autres opérations sont exécutées par ledit microcircuit.

10. Carte à microcircuit selon la revendication 9, **caractérisée en ce que** lesdits moyens de sélection comportent un multiplexeur (20) ou analogue commandé par un processeur (P) dudit microcircuit, **en ce que** ce multiplexeur comprend deux entrées, l'une connectée à une borne de contact (16a) pour le raccordement aux moyens d'alimentations électrique dudit serveur, et l'autre connectée audit accumulateur (19), une sortie dudit multiplexeur étant reliée à une ligne d'alimentation électrique (22) dudit processeur, et **en ce que** ledit multiplexeur est commandé par ledit processeur pour opérer ladite sélection entre les moyens d'alimentation électrique dudit serveur et ledit accumulateur de courant.

11. Entité électronique selon la revendication 10, **caractérisée en ce qu'**un circuit de charge (25) dudit accumulateur de courant est connecté entre ladite borne de contact (16a) et ledit accumulateur (19), et **en ce que** ce circuit de charge est piloté par ledit processeur (P) pour recharger ledit accumulateur lorsque ladite au moins une partie dudit microcircuit est alimentée via ledit serveur.

12. Entité électronique selon la revendication 10, **caractérisée en ce qu'**elle comporte une cellule photoélectrique (27) connectée pour recharger ledit accumulateur de courant.

13. Entité électronique selon l'ensemble des revendications 11 et 12, **caractérisée ce que** ladite cellule photoélectrique (27) est reliée audit circuit de charge (25).

14. Entité électronique selon la revendication 9, **caractérisée en ce que** ledit microcircuit comporte un processeur principal (Po) et un coprocesseur (P1), ce dernier étant dédié à l'exécution desdites opérations prédéterminées, et **en ce que** ledit coprocesseur (P1) est alimenté par ledit accumulateur de courant (19) via lesdits moyens de sélection.

15. Entité électronique selon la revendication 9, **caractérisée en ce que** ledit microcircuit comporte un circuit opératoire (29) formant leurre, connecté auxdits moyens de couplage pour être directement alimenté par ledit serveur, et **en ce que** ce circuit opératoire est piloté pour exécuter des opérations lorsque ladite au moins une partie dudit microcircuit est alimentée par ledit générateur de courant.

16. Entité électronique selon l'une quelconque des revendications 9 à 15, **caractérisé en ce que** lesdites opérations prédéterminées comportent les opérations mettant en oeuvre des données confidentielles conservées dans ladite entité électronique.

17. Entité électronique selon la revendication 16, **caractérisé en ce que** lesdites opérations prédéterminées comportent les opérations d'un protocole cryptographique mettant en oeuvre une clé secrète conservée dans ladite entité électronique.

## Claims

1. A method of protecting a microcircuit electronic entity such as a microcircuit card against current analysis attack, of the type consisting in associating with said microcircuit (15) a battery (19) placed inside said entity in such a way that, during an exchange of information in which said entity is coupled to a server (12) adapted to provide it with an electrical power supply (13), at least a portion of said microcircuit is supplied with electrical power provided by said battery during the execution of predetermined operations by said at least one portion of said microcircuit, **characterised in that**, in order to supply at least said portion of said microcircuit with electrical power, said portion of the microcircuit is connected to said battery only during the execution of said predetermined operations, said server providing said microcircuit with electrical power during the execution of said other operations, and not providing said portion of the microcircuit with electrical power during said predetermined operations.

2. A method according to claim 1, **characterised in that** said battery (19) is rechargeable and is charged with electrical energy supplied by said server (13) when said electronic entity is coupled thereto.

3. A method according to claim 2, **characterised in that** the charging (25) of said battery (19) is commanded outside time periods in which said battery is used to supply power to at least one portion of said microcircuit.

4. A method according to claim 2 or claim 3, **characterised in that** said battery is at least partly charged with electrical energy generated by solar means by means of a photoelectric cell (27) integrated into said electronic entity.

5. A method according to any one of claims 1 to 4, **characterised in that** said predetermined operations are executed by a coprocessor (P₁) supplied with power by said battery (19).

6. A method according to any one of claims 1 to 4, **characterised in that** a processor (P) is switched so that it is supplied with power by said battery (19) when it is executing said predetermined operations and **in that**, during said time periods, said server supplies power to a decoy circuit (29) which continues to effect operations.

7. Method according to any of claims 1 to 6 **characterised in that** said predetermined operations include the operations using confidential data stored in said electronic entity.

8. Method according to claim 7, **characterised in that** said predetermined operations include the operations of a cryptographic protocol using a secret key stored in said electronic entity.

9. An encrypted access electronic entity comprising a microcircuit (15) and means (16a, 16b) for coupling the latter to a server (12) itself provided with electrical power supply means (13) for supplying power to said microcircuit via said coupling means, **characterised in that** it further includes an integrated battery (19) and selector means (20) adapted to switch:
- the power supply of at least a portion of said microcircuit exclusively to said battery when predetermined operations are being executed by said at least one portion of said microcircuit; and
- the power supply of at least said portion of said microcircuit exclusively to said electrical power supply means of said server when other operations are being executed by said microcircuit.

10. A microcircuit card according to claim 9, **characterised in that** said selector means include a multiplexer (20) or the like controlled by a processor (P) of said microcircuit, **in that** said multiplexer has two inputs, one of which is connected to a contact terminal (16a) for the connection to the electrical power supply means of said server and the other of which is connected to said battery (19), an output of said multiplexer is connected to an electrical power supply line (22) of said processor, and **in that** said multiplexer is commanded by said processor to effect said selection between the electrical power supply means of said server and said battery.

11. An electronic entity according to claim 10, **characterised in that** a circuit (25) for charging said battery is connected between said contact terminal (16a) and said battery (19) and said charging circuit is commanded by said processor (P) to charge said battery when said at least one portion of said microcircuit is being supplied with power via said server.

12. An electronic entity according to claim 10, **characterised in that** it includes a photoelectric cell (27) connected to charge said battery.

13. An electronic entity according to claim 11 in conjunction with claim 12, **characterised in that** said photoelectric cell (27) is connected to said charging circuit (25).

14. An electronic entity according to claim 9, **characterised in that** said microcircuit includes a main processor (P₀) and a coprocessor (P₁), the latter being dedicated to execution of said predetermined operations, and **in that** said coprocessor (P₁) is supplied with power by said battery (19) via said selector means.

15. An electronic entity according to claim 9, **characterised in that** said microcircuit includes a decoy circuit (29) connected to said coupling means to be supplied with power directly by said server and **in that** said decoy circuit is commanded to execute operations when said at least one portion of said microcircuit is being supplied with power by said battery.

16. An electronic entity according to any one of claims 9 to 15, **characterised in that** said predetermined operations include operations employing confidential data stored in said electronic entity.

17. An electronic entity according to claim 16, **characterised in that** said predetermined operations include the operations of a cryptographic protocol using a secret key stored in said electronic entity.

## Patentansprüche

1. Verfahren zum Schützen einer elektronischen Mikroschaltungseinheit, wie einer Mikroschaltungskarte bzw. Smartcard, gegen Angriffe durch Energieverbrauchsanalyse bzw. gegen Power Analysis Attacks, der Typs, der darin besteht, der Mikroschaltung (15) einen Stromakkumulator bzw. -speicher (19) zuzuordnen, der so im Inneren der Einheit platziert ist, dass während eines Informationsaustausches, bei dem die Einheit mit einem Server (12) gekoppelt ist, der geeignet ist, diese mit einer Stromzufuhr (13) zu versorgen, zumindest ein Abschnitt der Mikroschaltung durch die elektrische Energie gespeist wird, die von dem Akkumulator während der Ausführung von vorbestimmten Operationen durch den zumindest einen Abschnitt der Mikroschaltung bereitgestellt wird, **dadurch gekennzeichnet, dass** zum Speisen von zumindest des Abschnitts der Mikroschaltung dieser Abschnitt der Mikroschaltung während der Ausführung der vorbestimmten Operationen nur mit dem Akkumulator verbunden wird, wobei der Server die elektrische Energie während der Ausführung von anderen Operationen an die Mikroschaltung liefert und während der vorbestimmten Operationen keine elektrische Energie an den Abschnitt der Mikroschaltung liefert.

2. Verfahren nach Anspruch 1, **dadurch gekennzeichnet, dass** der Stromakkumulator (19) vom wiederaufladbaren Typ ist, der durch die elektrische Energie aufgeladen wird, die von dem Server (13) bereitgestellt wird, wenn die elektronische Einheit gekoppelt ist.

3. Verfahren nach Anspruch 2, **dadurch gekennzeichnet, dass** die Ladung (25) des Akkumulators (19) außerhalb von Zeiträumen angesteuert wird, in denen der Akkumulator zum Speisen des zumindest einen Abschnitts der Mikroschaltung verwendet wird.

4. Verfahren nach Anspruch 2 oder 3, **dadurch gekennzeichnet, dass** der Akkumulator zumindest teilweise durch die elektrische Energie, die aus Sonnenenergie (27) stammt, mittels einer photoelektrischen Zelle aufgeladen wird, die in der elektronischen Einheit integriert ist.

5. Verfahren nach einem der Ansprüche 1 bis 4, **dadurch gekennzeichnet, dass** die vorbestimmten Operationen durch einen Coprozessor (P1) ausgeführt werden, der von dem Akkumulator (19) gespeist wird.

6. Verfahren nach einem der Ansprüche 1 bis 4, **dadurch gekennzeichnet, dass** ein Prozessor (P) eingeschaltet wird, um durch den Akkumulator (19) gespeist zu werden, während er die vorbestimmten Operationen ausführt, und **dadurch**, dass während dieser Zeiträume ausgehend von dem Server eine einen Köder bildende Schaltung (29) gespeist wird, welche die Operationen weiter durchführt.

7. Verfahren nach einem der Ansprüche 1 bis 6, **dadurch gekennzeichnet, dass** die vorbestimmten Operationen die Operationen umfassen, die in der elektronischen Einheit gespeicherte vertrauliche Angaben verwenden.

8. Verfahren nach Anspruch 7, **dadurch gekennzeichnet, dass** die vorbestimmten Operationen die Operationen eines kryptographischen Protokolls umfassen, die einen in der elektronischen Einheit gespeicherten geheimen Schlüssel verwenden.

9. Elektronische Einheit mit verschlüsseltem Zugriff, umfassend eine Mikroschaltung (15) und Kopplungsmittel (16a, 16b) davon zu einem Server (12), der selbst mit Stromzufuhrmitteln (13) versehen ist, um die Mikroschaltung über die Kopplungsmittel zu speisen, **dadurch gekennzeichnet, dass** sie zudem einen integrierten Stromakkumulator bzw. -speicher (19) und Auswahlmittel (20) umfasst, die angeordnet sind, um einzuschalten:
- die Speisung zumindest eines Abschnitts der Mikroschaltung ausschließlich über den Stromakkumulator, wenn vorbestimmte Operationen durch den zumindest einen Abschnitt der Mikroschaltung ausgeführt werden, und
- die Speisung zumindest des Abschnitts der Mikroschaltung ausschließlich über die elektrischen Zufuhrmittel des Servers, wenn andere Operationen durch die Mikroschaltung ausgeführt werden.

10. Mikroschaltungskarte bzw. Smartcard nach Anspruch 9, **dadurch gekennzeichnet, dass** die Auswahlmittel einen Multiplexer (20) oder Analoges umfassen, der durch einen Prozessor (P) der Mikroschaltung angesteuert wird, **dadurch**, dass der Multiplexer zwei Eingänge umfasst, und zwar einen, der mit einem Kontaktanschluss bzw. -klemme (16a) für die Verbindung bzw. Anschluss mit elektrischen Zufuhrmitteln des Servers verbunden ist, und einen anderen, der mit dem Akkumulator (19) verbunden ist, wobei ein Ausgang des Multiplexers mit einer elektrischen Zufuhrleitung (22) des Prozessors verbunden bzw. geschaltet ist, und **dadurch**, dass der Multiplexer durch den Prozessor angesteuert wird, um die Auswahl zwischen bzw. unter den elektrischen Zufuhrmitteln des Servers und des Stromakkumulators zu bewirken.

11. Elektronische Einheit nach Anspruch 10, **dadurch gekennzeichnet, dass** eine Ladungsschaltung (25) des Stromakkumulators zwischen dem Kontaktanschluss (16a) und dem Akkumulator (19) verbunden ist, und **dadurch**, dass die Ladungsschaltung durch den Prozessor (P) gesteuert bzw. geregelt wird, um den Akkumlator aufzuladen, wenn der zumindest eine Abschnitt der Mikroschaltung über den Server gespeist wird.

12. Elektronische Einheit nach Anspruch 10, **dadurch gekennzeichnet, dass** sie eine photoelektrische Zelle (27) umfasst, die verbunden ist, um den Stromakkumulator aufzuladen.

13. Elektronische Einheit nach der Gesamtheit der Ansprüche 11 und 12, **dadurch gekennzeichnet, dass** die photoelektrische Zelle (27) mit der Ladungsschaltung (25) geschaltet ist.

14. Elektronische Einheit nach Anspruch 9, **dadurch gekennzeichnet, dass** die Mikroschaltung einen Hauptprozessor (Po) und einen Coprozessor (P1) umfasst, wobei der letztere der Ausführung der vorbestimmten Operationen dient, und **dadurch**, dass der Coprozessor (P1) durch den Stromakkumulator (19) über die Auswahlmittel gespeist wird.

15. Elektronische Einheit nach Anspruch 9, **dadurch gekennzeichnet, dass** die Mikroschaltung eine einen Köder bildende Betriebsschaltung (29) umfasst, die mit den Kopplungsmitteln verbunden ist, um direkt durch den Server gespeist zu werden, und **dadurch**, dass diese Betriebsschaltung gesteuert bzw. geregelt wird, um die Operationen durchzuführen, wenn der zumindest eine Abschnitt der Mikroschaltung durch den Stromgenerator gespeist wird.

16. Elektronische Einheit nach einem der Ansprüche 9 bis 15, **dadurch gekennzeichnet, dass** die vorbestimmten Operationen die Operationen umfassen, die in der elektronischen Einheit gespeicherte vertrauliche Angaben verwenden.

17. Elektronische Einheit nach Anspruch 16, **dadurch gekennzeichnet, dass** die vorbestimmten Operationen die Operationen eines kryptographischen Protokolls umfassen, die einen in der elektronischen Einheit gespeicherten geheimen Schlüssel verwenden.
